# EUROPÄISCHE PATENTSCHRIFT

(11) **EP 1 039 270 B1**
(45) Veröffentlichungstag und Bekanntmachung des Hinweises auf die Patenterteilung: **18.06.2003**
(21) Anmeldenummer: 00106302.3
(22) Anmeldetag: 23.03.2000
(51) Int. Cl.: G01F 15/06

(54) **Wasserzähler**
Water meter
Compteur d'eau

(30) Priorität: 24.03.1999 DE 29905399 U
(43) Veröffentlichungstag der Anmeldung: 27.09.2000
(73) Patentinhaber: Zenner GmbH & Co. KGaA, 66121 Saarbrücken (DE)
(72) Erfinder: Backes, Hermann, 66280 Sulzbach (DE)
(74) Vertreter: Vièl, Christof, Dipl.-Ing.

(56) Entgegenhaltungen:
- DE-A- 3 147 921
- US-A- 4 031 362
- US-A- 4 134 026

## Beschreibung

Die Erfindung betrifft einen Wasserzähler mit einem magnetischen Impulsgeber, wobei ein erster Reedkontakt mit einem ersten Schutzwiderstand in Reihe geschaltet ist.

Derartige Wasserzähler sind bekannt. Es ist in der Regel möglich, bestehende Wasserzähler durch Aufstecken eines magnetischen Impulsgebers aufzurüsten, was ohne Verletzung der Eichplomben des Wasserzählers möglich ist. Somit ist auch bei einem Defekt des Impulszählers ein einfacher Austausch möglich. Über den magnetischen Impulsgeber kann eine Impulsübertragung an Funk- und Zählmodule erfolgen. Übliche Impulsfolgen sind 10 l/Impuls oder 100 l/Impuls.

Allerdings kann durch einen in der Nähe des magnetischen Impulsgebers angeordneten Magneten der Impulsgeber manipuliert werden. Der Magnet blockiert den magnetischen Geber des Impulszählers, so daß keine weiteren Zählimpulse mehr erfolgen.

Aufgabe der Erfindung ist es daher, einen Wasserzähler gemäß dem Oberbegriff zu entwickeln, bei dem ein Defekt oder eine Manipulation detektiert werden können.

Diese Aufgabe wird erfindungsgemäß dadurch gelöst, daß ein zweiter Reedkontakt mit einem dazu parallel geschalteten zweiten, höherohmigen Widerstand parallel zu dem ersten Reedkontakt und dem ersten Schutzwiderstand geschaltet ist.

Dieser zweite Widerstand dient zum Überprüfen der Funktionsfähigkeit des Kabels. Auf diese Weise ist es auch möglich, eine Manipulation des magnetischen Impulsgebers zu detektieren.

Eine Ausbildung der Erfindung besteht darin, daß der zweite Widerstand mindestens 1.000fach größer ist als der erste Schutzwiderstand.

Weiterhin liegt es im Rahmen der Erfindung, daß Anzeigemittel zum Anzeigen der Schaltung des zweiten Reedkontaktes vorgesehen sind.

Ebenfalls ist es erfindungsgemäß, daß der Wasserzähler eine Magnetschutzhaube aufweist.

Mittels der Magnetschutzhaube kann der Einfluß externer Magnete verringert werden.

Eine vorteilhafte Ausgestaltung besteht darin, daß der magnetische Impulsgeber auf den Wasserzähler aufsteckbar ist.

Die Vorteile der Erfindung bestehen im wesentlichen darin, daß ein Kabelbruch oder ein Manipulationsversuch (z.B. ein Durchtrennen des Kabels) nachweisbar und erfaßbar ist.

Im folgenden wird ein Ausführungsbeispiel der Erfindung anhand von Zeichnungen beschrieben.

Es zeigen
- Fig. 1: den Schaltplan eines erfindungsgemäßen magnetischen Impulsgebers,
- Fig. 2: den Schaltplan eines Impulsgebers gemäß dem Stand der Technik.

Auf einen Wasserzähler wird ein magnetischer Impulsgeber aufgesteckt.

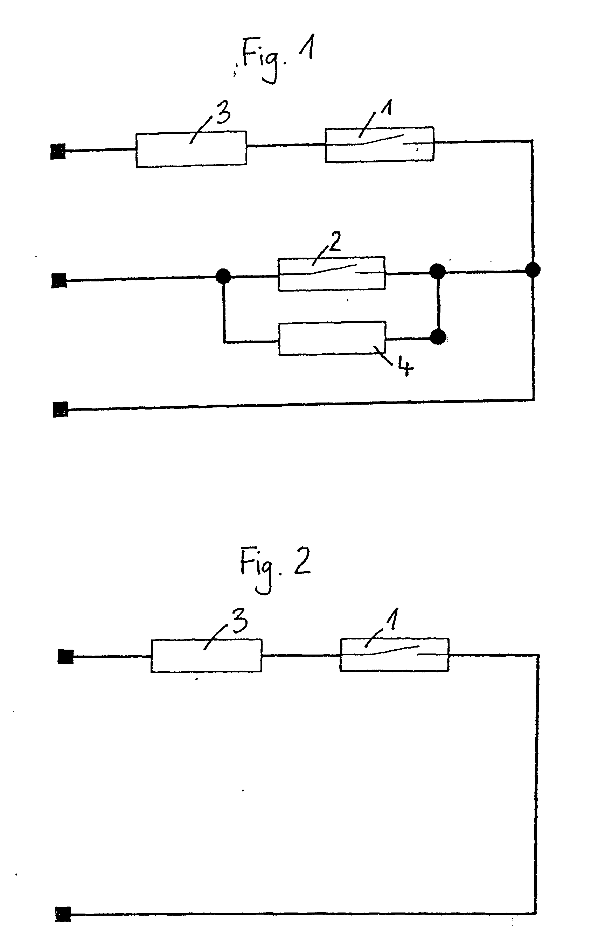

Wie aus den Fig. 1 und 2 ersichtlich ist, ist ein erster Reedkontakt 1 mit einem dazu in Reihe geschalteten Schutzwiderstand 3 von 50 Ω vorgesehen. Da dieser Reedkontakt 1 leicht mit einem Magneten manipuliert, d.h. blockiert werden kann, ist erfindungsgemäß (Fig. 1) vorgesehen, daß ein zweiter Reedkontakt 2 mit einem dazu parallel geschalteten hochohmigen Widerstand 4 von 100 kΩ zu dem ersten Reedkontakt 1 parallel geschaltet ist.

Hierdurch kann detektiert werden, wenn bei einer Schaltung gemäß dem Stand der Technik (Fig. 2) der Reedkontakt 1 des magnetischen Impulsgebers z.B. durch einen Magneten manipuliert wird.

Bei einer derartigen Manipulation von außen wird die Schaltung des zweiten Reedkontaktes detektiert und an ein Erfassungssystem weitergeleitet bzw. über Anzeigemittel angezeigt.

Zusätzlich kann der Wasserzähler mit einer Magnetschutzhaube, z.B. aus Stahlblech, ausgerüstet sein, um den Einfluß externer Magnete zu minimieren.

## Patentansprüche

1. Wasserzähler mit einem magnetischen Impulsgeber, wobei ein erster Reedkontakt mit einem ersten Schutzwiderstand in Reihe geschaltet ist, **dadurch gekennzeichnet, daß ein** zweiter Reedkontakt (2) mit einem dazu parallel geschalteten zweiten, höherohmigen Widerstand (4) parallel zu dem ersten Reedkontakt (1) und dem ersten Schutzwiderstand (3) geschaltet ist.

2. Wasserzähler gemäß Anspruch 1, **dadurch gekennzeichnet, daß** der zweite Widerstand (3) mindestens 1.000fach größer ist als der erste Schutzwiderstand (4).

3. Wasserzähler gemäß Anspruch 1, **dadurch gekennzeichnet, daß** Anzeigemittel zum Anzeigen der Schaltung des zweiten Reedkontaktes (2) vorgesehen sind.

4. Wasserzähler gemäß Anspruch 1, **dadurch gekennzeichnet, daß** der Wasserzähler eine Magnetschutzhaube aufweist.

5. Wasserzähler gemäß einem der Ansprüche 1 bis 4, **dadurch gekennzeichnet, daß** der magnetische Impulsgeber auf den Wasserzähler aufsteckbar ist.

## Claims

1. A water meter with a magnetic pulse generator, a first reed contact being connected in series with a first protective resistor, **characterised in that** a second reed contact (2) having a second, high-resistance resistor (4) connected in parallel therewith is connected in parallel with the first reed contact (1) and the first protective resistor (3).

2. The water meter of claim 1, **characterised in that** the second resistor (4) has a resistance at least 1,000 times greater than that of the first protective resistor (3).

3. The water meter of claim 1, **characterized in that** display means are provided to indicate switching of the second reed contact (2).

4. The water meter of claim 1, **characterised in that** the water meter has a protective cap to shield it against magnetism.

5. The water meter according to one of claims 1 to 4, **characterised in that** the magnetic pulse generator can be attached to the water meter.

## Revendications

1. Compteur d'eau avec un générateur d'impulsions magnétique, un premier contact Reed étant connecté en série avec une première résistance de protection, **caractérisé en ce qu**'un second contact Reed (2) avec une seconde résistance de protection (4) de plus grande résistance branchée en parallèle est connecté en parallèle au premier contact Reed (1) et à la première résistance de protection (3).

2. Compteur d'eau selon la revendication 1, **caractérisé en ce que** la seconde résistance (4) est au moins 1 000 fois plus importante que la première résistance de protection (3).

3. Compteur d'eau selon la revendication 1, **caractérisé en ce que** des moyens d'affichage sont prévus pour afficher l'état de branchement du second contact Reed (2).

4. Compteur d'eau selon la revendication 1, **caractérisé en ce que** le conteur d'eau est équipé d'un capot de protection magnétique.

5. Compteur d'eau selon l'une des revendications 1 à 4, **caractérisé en ce que** le générateur d'impulsion magnétique peut être appliqué sur le compteur d'eau.
